(19) Europäisches Patentamt
European Patent Office
Office européen des brevets

(11) **EP 4 380 804 B1**

(12) **FASCICULE DE BREVET EUROPEEN**

(45) Date de publication et mention
de la délivrance du brevet:
**02.07.2025 Bulletin 2025/27**

(21) Numéro de dépôt: **22758569.2**

(22) Date de dépôt: **01.08.2022**

(51) Classification Internationale des Brevets (IPC):
***B60C 11/24*** *(2006.01)*     ***B60C 23/04*** *(2006.01)*

(52) Classification Coopérative des Brevets (CPC):
**B60C 11/246; B60C 23/064; G01M 17/02;**
B60C 2019/004

(86) Numéro de dépôt international:
**PCT/FR2022/051539**

(87) Numéro de publication internationale:
**WO 2023/012429 (09.02.2023 Gazette 2023/06)**

(54) **METHODE D'OBTENTION DE LA DEFORMATION D'UN PNEUMATIQUE SOUMIS A UNE CHARGE EN ROULAGE**

VERFAHREN ZUR ERMITTLUNG DER VERFORMUNG EINES REIFENS, DER BEIM ROLLEN EINER BELASTUNG UNTERWORFEN WIRD

METHOD OF OBTAINING THE DEFORMATION OF A TIRE SUBJECTED TO A LOAD IN ROLLING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.08.2021 FR 2108545**

(43) Date de publication de la demande:
**12.06.2024 Bulletin 2024/24**

(73) Titulaire: **COMPAGNIE GENERALE DES ETABLISSEMENTS MICHELIN**
**63000 Clermont-Ferrand (FR)**

(72) Inventeurs:
• **NUYTTEN, Simon**
**63040 Clermont-Ferrand Cedex 9 (FR)**
• **ALFF, Denis**
**63040 Clermont-Ferrand Cedex 9 (FR)**
• **MARTIN, Denis**
**63040 Clermont-Ferrand Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2020/128277     WO-A1-2020/128279**

**Description**

**Domaine de l'invention**

La présente invention concerne le domaine des signaux de mesure délivrés par des moyens de mesure embarqués sur l'ensemble monté d'un véhicule terrestre lors d'un roulage.

**Arrière-plan technologique**

Les développements récents des ensembles montés connectés mesurant des grandeurs physiques de l'ensemble monté à l'aide de capteurs embarqués dans l'ensemble monté conduissent à déterminer l'état de l'ensemble monté et donc ouvrent la porte aux développements de services liés à la surveillance de l'état de l'ensemble monté. Si, des grandeurs générales mesurées telle que la pression de gonflage de l'ensemble monté ou la température de cet ensemble monté sont peu sensibles aux bruits de mesure générés par la rotation de l'ensemble monté sur un sol de rugosité aléatoire puisque ces grandeurs générales varient peu au cours de la rotation de l'ensemble monté, des grandeurs plus fines sont fortement sensibles aux phénomènes physiques liés à la rotation de l'ensemble monté. De plus, l'ensemble monté est soumis à des efforts externes. Certains sont liés au mouvement de l'ensemble monté comme la résistance au roulement. D'autres sont appliqués à tout instant et en particulier en statique comme la charge. Ces efforts appliqués peuvent influencer des grandeurs fines que l'on cherche à mesurer. Enfin, les nouveaux services nécessitent de nettoyer les grandeurs physiques directement mesurées avant de récolter l'information utile des signaux de mesure comme la déformation de l'enveloppe pneumatique.
L'un des objets de l'invention qui va suivre a pour objectif de résoudre les problèmes de perturbations des signaux de mesure enregistrés par un capteur afin de ne recueillir qu'une mesure nettoyée des perturbations de certains phénomènes physiques dans le but d'obtenir une grandeur, vectorielle ou scalaire, de la déformation de l'enveloppe pneumatique.
Afin de mieux comprendre l'invention, on entend ici par les directions circonférentielle S, axiale A et radiale R, des directions définies par rapport au repère tournant de l'enveloppe pneumatique autour de son axe de rotation naturel. La direction radiale R est la direction s'éloignant perpendiculairement de l'axe de rotation naturel. La direction axiale A est la direction parallèle à l'axe de rotation naturel. Enfin la direction circonférentielle S forme un trièdre direct avec les directions radiale et axiale prédéfinies.

**Description de l'invention**

L'invention porte sur une méthode d'obtention de la déformation d'une enveloppe pneumatique. L'enveloppe pneumatique est dans un état monté sur roue afin de constituer un ensemble monté en condition de roulage à une vitesse de rotation W soumis à une charge. L'enveloppe pneumatique a un sommet, destiné à être en contact avec le sol qui est de révolution autour d'un axe naturel de rotation. La méthode comporte les étapes suivantes :

- Fixer au moins un capteur sur l'enveloppe pneumatique au droit du sommet de l'enveloppe pneumatique apte à générer au moins un signal de sortie sensible à l'accélération selon la direction normale au sommet subie par ledit capteur dans l'enveloppe pneumatique ;
- Réaliser l'acquisition d'au moins un premier signal Sig temporel comprenant au moins l'amplitude du au moins un signal de sortie lors d'un roulage ;
- Délimiter le premier signal sur un nombre $N^{TDR}$ de tours de roue, $N^{TDR}$ étant supérieur ou égal à 1, afin de construire un signal tour de roue $Sig^{TDR}$ ;
- Déterminer au moins une vitesse de référence $W^{reference}$ associée a au moins une partie du signal tour de roue $Sig^{TDR}$;
- Normaliser la au moins une partie du signal tour de roue $Sig^{TDR}$ par une grandeur qui est une fonction F proportionnelle au carré de la vitesse de référence $W^{reference}$, sur un nombre de tour de roue $N'^{TDR}$, $N'^{TDR}$ étant supérieur ou égal à 1 ;
- Rééchantillonner angulairement la au moins une partie du signal tour de roue $Sig^{TDR}$ ;
- Définir au moins une première densité d'énergie S à partir de la au moins une partie du signal tour de roue $Sig^{TDR}$ normalisé rééchantillonné angulairement, nommée $S^+$ lorsque la au moins une partie du signal tour de roue $Sig^{TDR}$ normalisé rééchantillonné angulairement est supérieure à un seuil A, ou nommée $S^-$ lorsque la au moins une partie du signal tour de roue $Sig^{TDR}$ normalisé rééchantillonné angulairement est inférieur ou égal au dit seuil A ;
- Identifier la déformation de l'enveloppe pneumatique $Def_\%$ comme une fonction G de la au moins une première densité d'énergie S.

Le signal récupéré du capteur est l'amplitude temporelle de l'accélération du capteur au cours d'un roulage de l'ensemble monté dans les conditions énoncés. Dans la direction normale au sommet De ce fait, on visualise sur le signal acquis les variations en amplitude sur une partie du tour de roue de l'enveloppe pneumatique dont potentiellement celles associées à la traversée de l'aire de contact par la partie de l'enveloppe pneumatique où est fixé le capteur mais aussi celles associées à d'autres zones spécifiques du tour de roue comme celle correspondant au secteur angulaire opposé à l'aire de contact qui est sensible à la contre flèche, ou celles correspondant aux secteurs angulaires situés à 90 degrés de l'aire de contact par rapport à l'axe de rotation. Dans toutes ces zones, des variations de mouvement du capteur, de type accélérométrique, sont potentiellement observables sur le signal de sortie selon la sensibilité du capteur.

Sur le premier signal acquis, on associe une vitesse de référence qui peut être identifiée sur ce premier signal ou issue d'une autre source comme un autre signal ou la sortie d'une grandeur d'un système externe à l'ensemble monté. Cette vitesse de référence est associée obligatoirement à la même trame temporelle que la partie du premier signal. Cette vitesse de référence sert à normaliser l'amplitude du premier signal à l'aide d'une fonction F dont la variable est la vitesse de référence. La fonction F est la fonction puissance au carré. En fonction de la dépendance de l'amplitude du signal du capteur à la vitesse de référence si cette dépendance est perçue comme un signal parasite de la déformation de l'enveloppe pneumatique, la normalisation du signal du capteur est entreprise. Ainsi, le premier signal normalisé devient indépendant de cette vitesse de référence. Par exemple cette vitesse de référence peut être la vitesse de rotation de l'ensemble monté ou la vitesse de translation de l'ensemble monté selon la direction de déplacement de l'ensemble monté. De ce fait, le premier signal peut être exploité indépendamment de la vitesse de référence qui est liée à la rotation de l'ensemble monté.

La méthode comprend aussi une étape de délimitation du premier signal Sig sur un nombre de tours de roue dans le but de profiter de la périodicité du signal du capteur avec la rotation naturelle de l'enveloppe pneumatique en condition de roulage. Cependant, il n'est pas indispensable que le nombre de tours de roue soit entiers à cette étape, on peut avoir une délimitation du signal sur un nombre réel de tour de roue tant que ce nombre de tour de roue soit au moins supérieure à 1. Préférentiellement, il faut plusieurs tours de roue.

La méthode comprend aussi un rééchantillonnage angulaire du premier signal ou du signal tour de roue qui peut avoir lieu avant ou après l'étape de normalisation. Cette étape permet de transformer le signal temporel en un signal spatial en phasant le signal temporel par rapport à une ou plusieurs références angulaires de l'ensemble monté. Cette référence angulaire peut tout d'abord être prise sur le premier signal par une réponse spécifique du capteur à un azimut particulier au tour de roue. Mais, cette référence angulaire peut aussi être issue d'un autre signal d'un capteur qui partage une horloge commune avec le premier signal. Ce partage d'horloge ou synchronisation des signaux est naturelle si les deux capteurs sont issus du même dispositif ou si les signaux transitent vers un dispositif commun. Ce rééchantillonnage angulaire permet naturellement de générer un signal spatialement périodique au tour de roue. Il suffit pour cela de mener une interpolation des signaux sur un découpage angulaire figé pour générer un signal parfaitement périodique angulairement. Mais, au cas où l'ensemble monté est animé d'un mouvement à vitesse variable, ce rééchantillonnage permet malgré tout de générer un signal angulairement périodique. Il n'est pas indispensable pour la méthode que le rééchantillonnage angulaire génère un signal en sortie ayant un pas angulaire fixe.

Ensuite, la simple comparaison du niveau d'amplitude du signal tour de roue avec un seuil A permet de générer une densité d'énergie S. L'amplitude du signal tour de roue par rapport à un seuil A qui peut, par exemple, simplement être la valeur unité génère potentiellement un doublet de densités d'énergie de déformation positive et négative ($S^+$, $S^-$) à partir du signal tour de roue. Ainsi, la méthode ne fait que définir une densité d'énergie de déformation de l'enveloppe pneumatique et la distribuer dans deux sous-ensembles selon sa position par rapport au seuil A. Ce sont des opérations simples à réaliser qui consomment peu de ressources.

Enfin, la méthode détermine la déformation de l'enveloppe pneumatique comme une fonction de la densité d'énergie calculée. Ainsi, la déformation représente une énergie de déformation normalisée sur un tour de roue physique de l'enveloppe pneumatique. De ce fait, on identifie un invariant énergétique lié à la déformation de l'enveloppe pneumatique soumis à une charge en condition de roulage. Bien entendu, un seul tour de roue est nécessaire à la méthode. Cependant de façon préférentielle, le nombre de tours de roue sera d'au moins 5, voire 10 afin de moyenner les résultats ce qui permettra de s'affranchir de phénomènes aléatoires sur le signal comme des obstacles sur la chaussée sur laquelle roule l'enveloppe pneumatique. Ainsi, la précision de la méthode s'en trouve améliorée en mode industriel.

Avantageusement, l'étape de détermination de la vitesse de référence $W^{reference}$ consiste à effectuer le rapport de la variation angulaire sur la durée temporelle séparant deux positions azimutales du capteur dans l'enveloppe pneumatique autour de l'axe naturel de rotation à partir du signal tour de roue $Sig^{TDR}$ ou à partir d'un signal phasé avec le signal tour de roue $Sig^{TDR}$, suivant la formule suivante :

[Math 1]

$$W^{reference} = \Delta(\alpha)/\Delta(t)$$

Où $\alpha$ est la position angulaire et t est l'abscisse temporelle associée à la position angulaire.

Dans le cas où la vitesse de référence correspond à la vitesse de rotation angulaire de l'enveloppe pneumatique, cette vitesse de référence est calculée sur une variation angulaire du signal entre deux positions connues. Préférentiellement, cette vitesse de référence est évaluée sur une durée de signal inférieure à un tour de roue, ce qui permet de la définir rapidement et d'effectuer l'étape de normalisation d'une partie du premier signal au niveau du dispositif électronique associé au capteur. De plus, celle-ci permet alors de rééchantillonner angulairement la partie du premier signal avec une meilleure précision si l'enveloppe pneumatique est animée d'une vitesse angulaire variable. En effet, au niveau d'un tour de roue, la variation de vitesse angulaire est nécessairement faible pour un pneumatique dont le développement peut s'étendre à 2 mètres pour un pneumatique pour véhicule particulier ou 3 mètres pour un pneumatique pour poids lourds. L'accélération ou la décélération appliquée à l'enveloppe pneumatique sur cette longueur est, par nature, faible avec les systèmes d'entrainement et de freinage des véhicules actuels. Bien entendu, il est tout à fait possible d'intégrer une variation de vitesse angulaire au cours du tour de roue avec un azimutage plus fin afin de tenir compte par exemple des micro-variations de vitesse angulaire qui apparaissent au cours du tour de roue comme par exemple, avant et après la traversée de l'aire de contact ou lors de la rencontre avec une discontinuité de déplacement au sol, comme une barrette transversale sur le sol. Cette précision sur la vitesse de référence au cours du tour de roue permet alors une normalisation du signal plus précis mais aussi une précision angulaire accrue sur la position angulaire des points de mesure du premier signal au cours de l'étape de rééchantillonnage angulaire, ce qui améliore la précision recherchée pour capter des variations minimes au cours du tour de roue.

Selon un mode de réalisation particulier, les positions azimutales de l'enveloppe pneumatique sont comprises dans le groupe comprenant une position angulaire détectable sur le signal tour de roue Sig$^{TDR}$ correspondant à l'entrée dans l'aire de contact, la sortie de l'aire de contact ou la position centrale de l'aire de contact ou toute position angulaire définie à partir du signal phasé avec le signal tour de roue Sig$^{TDR}$.

Ce sont des positions azimutales ayant une incidence sur le signal du capteur d'accélération qui correspondent à des positions angulaires spécifiques. De ce fait, ces positions sont facilement repérables sur le signal du capteur. De plus, il est aisé de leur assigner leurs références azimutales. En effet, la position centrale de l'aire de contact correspond à une position azimutale de 0 ou 180 degrés par rapport à la normale au sol. Si on détermine une longueur de l'aire de contact au travers des points d'entrée et de sortie de l'aire de contact, on peut connaitre l'angle formé par l'aire de contact comme le ratio de la longueur de l'aire de contact sur le développement de l'enveloppe pneumatique ramené à un tour de roue, soit 360 degrés. On répartit équitablement le secteur formé par l'aire de contact de part et d'autre de la normale au sol. Bien entendu, l'accès à un autre signal que le premier signal permet aussi d'avoir une sectorisation angulaire plus fine que le tour de roue comme un codeur angulaire.

Avantageusement, le pas angulaire est inférieur à 18 degrés.

Ceci permet de s'assurer que l'un des points de mesure est situé au niveau de l'aire de contact. De ce fait, des variations d'accélération conséquentes seront au moins observées entre ce point d'échantillonnage et ses plus proches voisins permettant de déterminer un point d'entrée et de sortie de l'aire de contact sur le premier signal

Très avantageusement, le pas angulaire est inférieur à 6 degrés, préférentiellement inférieur à 3 degrés.

L'utilisation d'un pas angulaire plus fin permet de s'assurer de capter plusieurs points de mesure au niveau de l'aire de contact. Cette finesse d'observation assure une meilleure précision de la méthode en s'affranchissement de la discrétisation spatiale des points qui n'est pas ici forcément régulière. La multitude des points assure aussi de ne pas être perturbé par une mesure incohérente du capteur.

Selon un mode de réalisation privilégié, la méthode comprend une étape d'agrégation des données de la au moins une partie du signal tour de roue Sig$^{TDR}$ normalisé rééchantillonné angulairement sur au moins une sous partie de la au moins une partie du signal tour de roue Sig$^{TDR}$ normalisé rééchantillonné angulairement, la sous partie de la au moins une partie du signal tour de roue Sig$^{TDR}$ normalisé rééchantillonné angulairement devenant la au moins une partie du signal tour de roue Sig$^{TDR}$ normalisé rééchantillonné angulairement.

Préférentiellement, la sous partie de la au moins une partie du signal tour de roue Sig$^{TDR}$ normalisé rééchantillonné angulairement est un tour de roue.

Cette étape permet d'identifier un signal du tour de roue prenant en compte divers aléas au tour de roue, ce qui permet de réduire la taille des vecteurs à manipuler pour les deux dernières étapes de la méthode, notamment celle servant à identifier la première densité d'énergie S. A cet effet, la sous partie du signal tour de roue normalisé rééchantillonné angulairement est limité à un seul tour de roue.

Selon un mode de réalisation préférentiel, l'étape d'agrégation des données comprend une des méthodes comprises dans le groupe comprenant la moyenne sur un intervalle de décile, la médiane, la sélection ou l'intervalle de déciles, les méthodes d'interpolation, la moyenne pondérée ou non, l'optimisation de modèle paramétrique de la déformée du pneumatique

L'agrégation a pour vocation de caler les mesures effectuées sur une nouvelle répartition angulaire du premier signal afin de donner du sens à l'ensemble des données brutes de mesure en ne privilégiant pas une zone par rapport à une autre en raison d'une abondance de points de mesure. L'étape d'agrégation a pour objectif de délivrer un signal équilibré en termes de points de mesure avec un pas angulaire choisi par l'opérateur selon les déformations de l'enveloppe pneumatique que l'on souhaite observer. A cet effet, la méthode d'optimisation de modèle paramétrique de la déformée du pneumatique est bien adaptée puisque ce modèle paramétrique peut être théorique ne prenant pas en compte les bruts de mesure liées à 'ensemble de la chaine de mesure appliquée. Le signal de sortie de l'étape d'agrégation est une sortie théorique du modèle paramétrique ayant la dispersion minimale avec l'ensemble des points de mesure enregistrés.

Avantageusement, ayant phasé le premier signal Sig par rapport à une position angulaire de l'enveloppe pneumatique, une correction Corr est apportée au premier signal Sig pour prendre en compte l'effet de la gravité terrestre avant l'étape de normalisation.

L'inconvénient du signal accélérométrique est que celui-ci est sensible à la gravité terrestre s'il est orienté sensiblement parallèlement à la gravité terrestre. Dans le cas de l'enveloppe pneumatique, le capteur est lié en rotation à l'enveloppe pneumatique. De ce fait, lorsque le capteur est orienté radialement, l'amplitude du signal du capteur est influencée par la gravité terrestre au cours d'un tour de roue. En effet, celui-ci se retrouve dans le signal sous la forme d'une fonction sinusoïdale d'amplitude liée à la gravité terrestre présentant ses nœuds à des azimuts de l'enveloppe pneumatique séparés de 180 degrés lorsque l'orientation du capteur est alignée avec le vecteur gravitationnel, c'est - à- dire sensiblement perpendiculaire au sol. Inversement, lorsque le capteur est orienté parallèle au sol, ce qui correspond à deux positions azimutales distantes de 180 degrés l'une de l'autre et généralement à +/- 90 degrés du vecteur gravitationnel, le signal du capteur n'est pas influencé par la gravité terrestre. Afin d'éliminer cette composante parasite du signal accélérométrique, il convient de combiner l'amplitude du signal par une fonction sinusoïdale correspondant en ayant phasé le premier signal du capteur avec la verticale au sol correspondant à la direction du vecteur gravitationnel.

Selon un mode de réalisation particulier, la méthode comprend une étape de filtrage de la au moins une partie du signal tour de roue $Sig^{TDR}$ normalisé rééchantillonné angulairement.

Il peut persister sur le signal normalisé rééchantillonné angulairement des perturbations hautes fréquences qui seront traitées à l'étape suivante de définition de la première densité d'énergie S à l'aide du seuil A. Cependant, filtrer le signal simplifiera l'étape suivante en minimisant les erreurs possibles.

Préférentiellement, le seuil A est compris entre 0,5 et 0,9.

Le seuil a pour vocation de distribuer les points discrétisés du signal tour de roue $Sig^{TDR}$ normalisé rééchantillonné angulairement entre les densités d'énergie $S^+$ et $S^-$. Si, le signal est fortement bruité, comme en l'absence d'étape d'agrégation des données ou d'étape de filtrage, cette distribution des points peut être influencée par ces perturbations. Le seuil A a pour vocation de corriger cette imperfection liée au signal de mesure. La valeur du seuil A est fonction de la qualité du signal tour de roue $Sig^{TDR}$ normalisé rééchantillonné angulairement. Si la méthode prend les étapes optionnelles et que la rugosité de la route est faible, une valeur dans le haut de la fourchette sera privilégiée.

Très préférentiellement, la définition des densités d'énergie positive $S^+$ et négative $S^-$ est obtenue par les formules suivantes :

[Math 2a]

$$S^+ = \left| \sum_{Sig^{TDR} > A} (Sig^{TDR} - 1) \right| * \frac{N'^{TDR}}{N^U} \quad ;$$

et

[Math 2b]

$$S^- = \left| \sum_{Sig^{TDR} \leq A} (Sig^{TDR} - 1) \right| * \frac{N'^{TDR}}{N^U} \quad ;$$

Où u est l'abscisse du signal tour de roue $Sig^{TDR}$ normalisé rééchantillonné angulairement.

C'est une façon simple d'obtenir une valeur scalaire de chaque densité d'énergie à partir du signal discrétisé du signal tour de roue normalisé rééchantillonné angulairement à l'aide d'opérations mathématiques et logiques élémentaires. Ces opérations peuvent avoir lieu au niveau du dispositif électronique accouplé au capteur.

Préférentiellement, l'acquisition du premier signal est effectuée à une fréquence d'échantillonnage constante et la discrétisation spatiale d'échantillonnage du premier signal est inférieure à 6 degrés, préférentiellement inférieure à 3 degrés, très préférentiellement inférieure à 1 degré.

Par exemple si on souhaite que l'évaluation de la déformation de l'enveloppe pneumatique ait lieu au niveau de l'ensemble monté, il faut que le capteur soit associé à un organe électronique comprenant un microcontrôleur, un espace mémoire, une batterie et une horloge. Alors, la discrétisation spatiale envisagée avec une fréquence d'échantillonnage constante permet de réaliser des opérations élémentaires au niveau du microcontrôleur en minimisant la consommation de la batterie. De plus, la discrétisation minimale de l'ordre de 60 points au tour de roue permet de limiter le nombre d'opérations et de transfert vers l'espace mémoire. Pour autant, la précision obtenue sur la déformation de l'enveloppe pneumatique est bonne tout en ayant économisé la batterie de l'organe électronique. Cela permet de ne stocker ou de ne transférer que des valeurs scalaires intermédiaires de la méthode.

Avantageusement, la fonction G est une fonction linéaire de la densité spectrale S selon la formule suivante :

$$[\text{Math 3a}]$$

$$G(X) = X/N^{\text{'TdR}}$$

Ainsi, c'est une formule élémentaire de la déformation de l'enveloppe pneumatique qui s'applique soit à $S^+$, soit à $S^-$. Nécessairement, $S^-$ correspond à la densité d'énergie calculée à partir des points matériels du développement du pneumatique, qui à un instant T précis, comprennent ceux de l'aire de contact ou à sa proximité immédiate. En effet ceux-ci ont une accélération absolue proche de zéro lors de la traversée de l'aire de contact, ils sont donc nécessairement inférieurs au seuil A. Par défaut la densité d'énergie $S^+$ correspond à la densité d'énergie des autres points du développement du pneumatique et notamment ceux en dehors de l'aire de contact. Cela met en évidence que l'on se trouve en présence d'un invariant lié à la déformation de l'enveloppe pneumatique soumise à une charge Z. Dans le cas où on n'utilise que $S^+$, il n'est pas nécessaire d'avoir une discrétisation spatiale élevée puisque les variations en dehors de l'aire de contact sont moins fortes. Cela a pour avantage de réduire la fréquence d'échantillonnage nécessaire du dispositif électronique couplée au capteur ou de pouvoir obtenir une information précise sur la déformation de l'enveloppe pneumatique à des vitesse de rotations élevées.

Très avantageusement, la fonction G est une fonction linéaire des densités spectrales $S^+$ et $S^-$ selon la formule suivante :

$$[\text{Math 3b}]$$

$$G(X,Y) = (X+Y)/(2*N^{\text{'TdR}})$$

Dans ce cas, il faut cumuler l'énergie de déformation du pneumatique sur la totalité du développement du pneumatique. Afin de minimiser à coup sur les incertitudes de mesure, on utilise alors l'ensemble des points de mesure de l'accélération normale au sommet pour déterminer la déformation de l'enveloppe pneumatique, ce qui permet de réduire la consommation énergétique comparativement à une analyse avec un signal dont la fréquence d'échantillonnage est plus élevée.

## Description brève des dessins

L'invention sera mieux comprise à la lecture de la description qui va suivre donnée uniquement à titre d'exemple non limitatif et faite en se référant aux figures annexées dans lesquelles les mêmes numéros de référence désignent partout des parties identiques et dans lesquelles :

- La figure 1 présente un synoptique de la méthode selon l'invention.

- La figure 2 présente une illustration d'un premier signal d'un capteur.

- La figure 3 présente le rééchantillonnage angulaire du signal tour de roue.

- La figure 4 présente une illustration du signal rééchantillonné et normalisé du signal tour de roue.

- La figure 5 présente une illustration du signal final après agrégation des données sur une sous partie du signal tour de roue.

- La figure 6 est une illustration d'évaluation des densités d'énergie S à partir du signal tour de roue normalisé rééchantillonné angulairement.

**Description détaillée de modes de réalisation**

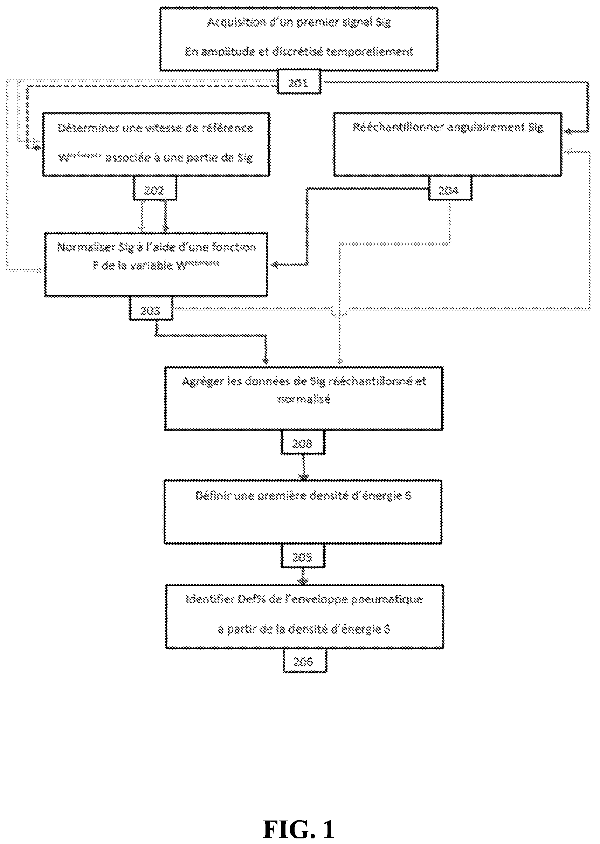

La Fig. 1 représente un synoptique de la méthode selon l'invention. En partant d'un premier signal Sig obtenu par acquisition temporelle 201 de la sortie en amplitude d'un capteur de mouvement lors d'un roulage de l'enveloppe pneumatique sur laquelle est monté le capteur, on effectue un certain nombre d'étapes suivant divers cheminements possibles pour obtenir un scalaire représentatif de la déformation de l'enveloppe pneumatique finalement.

Le premier cheminement consiste à partir du signal temporel à la sortie de l'étape 201, à déterminer une vitesse de référence $W^{reference}$ 202 de l'enveloppe pneumatique dans sa configuration ensemble monté, c'est-à-dire enveloppe pneumatique montée sur jante et gonflée. Ici, le premier signal Sig 101 est déjà délimité sur un certain nombre de tours de roue, 12 exactement. Par conséquent le premier signal Sig 101 est confondu avec le signal tour de roue $Sig^{TDR}$. Cette vitesse de référence peut être une vitesse angulaire liée à la rotation naturelle de l'enveloppe pneumatique autour de son axe de rotation mais il peut aussi s'agir de la vitesse linéique de translation de l'enveloppe pneumatique selon la direction de déplacement de celle-ci. Cette grandeur peut être déterminée à partir du signal tour de roue $Sig^{TDR}$ mais aussi être déterminée à partir d'un autre signal phasé temporellement avec le premier signal et donc le signal tour de roue $Sig^{TDR}$.

Ensuite, il convient de normaliser le signal tour de roue 203 à partir du premier signal issu de l'étape 201 par une fonction F de la variable $W^{reference}$ issue de l'étape 2. Cette fonction est la fonction puissance au carré. A la sortie de cette étape 203, on obtient un signal normalisé du mouvement de l'enveloppe pneumatique dans une description temporelle.

Il convient alors de rééchantillonner angulairement le signal normalisé afin de retrouver un signal périodique angulairement au tour de roue au travers de l'étape 204. Ainsi, à la fin de cette étape 204, on obtient un signal normalisé et rééchantillonné angulairement sur plusieurs tours de roue.

Le second cheminement consiste à partir du premier signal Sig, qui est aussi le signal tour de roue $Sig^{TDR}$, issu de la sortie de l'étape 201, à rééchantillonner le premier signal Sig angulairement en phasant ce premier signal à l'aide de la forme du premier signal ou en ayant un autre signal temporellement phasé avec le premier signal. L'autre signal émanant d'un autre capteur, ou autre voie du même capteur comme l'accélération circonférentielle d'un accéléromètre tridimensionnel. Ce rééchantillonnage angulaire du premier signal permet de générer un signal périodique autour de roue à la sortie de l'étape 204.

Après avoir phasé ce signal angulaire à l'aide d'un autre signal temporel, on détermine une vitesse de référence provenant d'un autre signal temporel phasé avec le premier signal. Préférentiellement, c'est le même autre signal ayant servi à rééchantillonner angulairement le premier signal à l'étape 204. On identifie ainsi une vitesse de référence $W^{reference}$ à la sortie de l'étape 202.

Ensuite, la vitesse de référence permet de normaliser le signal rééchantillonné angulairement issus de l'étape 204 à l'aide d'une fonction de la variable vitesse de référence. On obtient ainsi un signal tour de roue $Sig^{TDR}$ rééchantillonné angulairement normalisé à la sortie de l'étape 203.

Optionnellement, quel que soit le cheminement fait, on agrège les données du signal tour de roue $Sig^{TDR}$ rééchantillonné angulairement normalisé issus de l'étape 204 sur le premier cheminement ou de l'étape 203 sur le second cheminement. Cette agrégation des données est faite sur une sous partie du signal d'entrée qui est un seul tour de roue, puisque le signal rééchantillonné angulairement et normalisé est périodique au tour de roue par nature.

En alternative, si le premier signal 101 est pollué par des phénomènes physiques connus comme un signal accéléromètre influencé par la gravité terrestre, il est parfois utile bien que pas indispensable de réaliser une correction du premier signal de ce phénomène physique pour limiter le bruit parasité généré par ce phénomène physique. Cette correction peut avoir lieu entre n'importe quelle étape entre l'étape 201 et 204 mais nécessairement avant l'étape 205 d'agrégation des données, ce qui permet d'améliorer la qualité du signal de déformation de l'enveloppe pneumatique. Si la correction a lieu après l'étape de normalisation, il conviendra aussi de normaliser la correction pour ne pas introduire une erreur de correction.

Ensuite la méthode comprend une étape d'identification d'une densité d'énergie de déformation de l'enveloppe pneumatique 205 à partir du signal tour de roue normalisé rééchantillonné angulairement. Bien que cela puisse être fait sur une partie seulement du tour de roue au travers de la densité d'énergie positive $S^+$ ou la densité d'énergie négatif $S^-$, il est préférable de prendre au moins un tour de roue complet, ce qui permet d'avoir accès au deux grandeurs précitées. Il ne faut pas non plus oublier de comptabiliser le nombre de tours de roue $N'^{TDR}$ sur le signal tour de roue normalisé rééchantillonné angulairement. Si ce signal est délimité sur un tour de roue, l'identification des densités d'énergie est liée à la qualité de ce signal, ce qui justifie de passer par l'étape optionnelle d'agrégation des données. Cependant, si ce signal est délimité sur un grand nombre de tours de roue, ce signal peut contenir une fraction de tour de roue complémentaire qui ne modifiera que peu la valeur des densités d'énergie. Dans ce cas-là, il sera préférable de comptabiliser les tours de roue à partir de la position azimutale située à 180 degrés du centre de l'aire de contact. En effet, Les fractions supplémentaires de tour de roue apporteront des points complémentaires sur la densité d'énergie positive $S^+$ dont les variations entre les points sont plus faibles que lors des phases d'entrée et de sortie de l'aire de contact qui impacteront plus fortement la densité d'énergie négative $S^-$.

Enfin la méthode comprend une étape 206 d'identification de la déformation de l'enveloppe pneumatique en condition de roulage sous charge statique $Def_\%$. Ceci est fait en exploitant la ou les densités d'énergie $S^+$, $S^-$ évaluées à l'étape 205 au travers d'une fonction G.

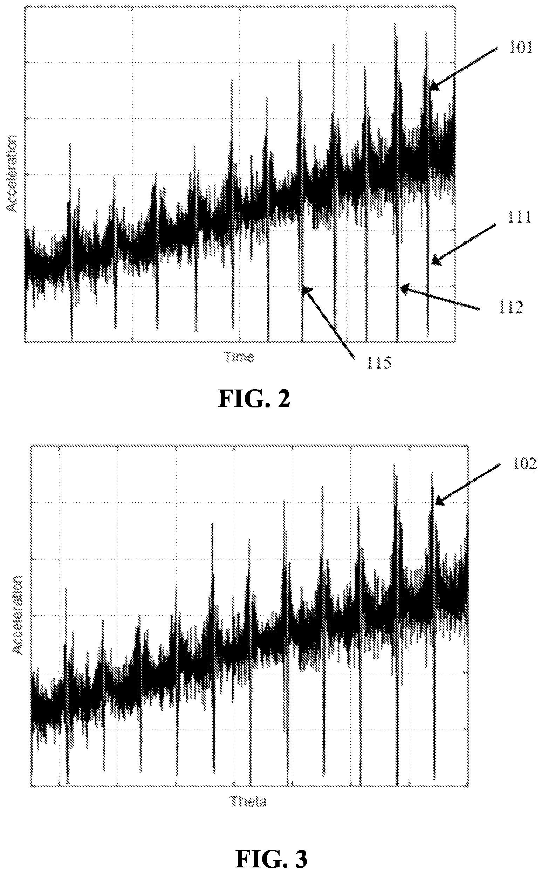

Les Fig. 2 à 4 sont une illustration de la méthode par le second cheminement décrit dans le synoptique de la Fig. 1. L'illustration est faite sur un accéléromètre fixé au droit du sommet d'une enveloppe pneumatique fixé sur la gomme intérieure de l'enveloppe pneumatique (en anglais « inner liner »). Ici, l'enveloppe pneumatique est de la Marque MICHELIN CrossClimate en dimension 265/65R17 sous une charge statique de 800daN lorsqu'il est monté sur un véhicule automobile. L'ensemble monté a été gonflé à 3 bars. Les mesures ont été effectuées lors d'un roulage du véhicule sur des circuits asphaltés de rugosité variée dans des conditions standards de vitesse et de charge appliquées selon le marquage du pneumatique. L'ensemble monté est situé sur l'essieu avant du véhicule. Les mesures ont été ici faites en conduite en ligne droite majoritairement.

Sur la Fig. 2, on visualise un signal temporel 101 acquis avec une fréquence d'acquisition du signal de 3200Hz permettant d'avoir une très fine discrétisation du signal. Celui-ci enregistre donc toutes les variations d'accélération au niveau du sommet de l'enveloppe pneumatique au cours du roulage. Celui-ci a été délimité sur 12 tours de roue afin de constituer le signal tour de roue $Sig^{TDR}$.

L'enregistrement de la Fig. 2 a été faite en phase d'accélération du véhicule ce qui se traduit par une augmentation de l'amplitude du signal accélérométrique. Le capteur est ici un accéléromètre mono axe monté radialement par rapport au sommet de l'enveloppe pneumatique avant de constituer l'ensemble monté par des techniques usuelles de fixation connues de l'état de l'art. La transmission des données a été faite par une communication sans fil entre un dispositif électronique connecté galvaniquement à l'accéléromètre et un second dispositif radiofréquence placé au niveau du véhicule. Dans ce cas particulier, les post traitements de mesure ont été effectués au niveau du véhicule. Cependant, il est tout à fait envisageable de les réaliser au niveau d'un premier dispositif électronique en liaison avec le capteur, muni d'un microcontrôleur, voire d'un microprocesseur, couplé à un espace mémoire suffisant pour effectuer les opérations mathématiques élémentaires que nécessitent la méthode.

Ici, la première étape consiste à déterminer la vitesse de référence en prenant comme vitesse de référence la vitesse angulaire de rotation. Pour cela, il convient de phaser le premier signal temporel 101 avec une position azimutale de référence du tour de roue. A cet effet, le premier signal 101 présente régulièrement des chutes du niveau d'amplitude assez forte 111, 112 qui traduit la traversée de l'aire de contact par le secteur angulaire où est situé l'accéléromètre. Par nature, ces descentes, respectivement ces remontées, de ces chutes 111, 112 représentent l'entrée, respectivement la sortie de l'aire de contact. On définira le centre de l'aire de contact comme le milieu de l'intervalle séparant l'entrée et la sortie de l'aire de contact. On affectera à ce centre la position azimutale 0 degrés qui sera notre référence azimutale. En prenant une seconde référence angulaire sur la prochaine chute du signal 112 par exemple, on détermine sur le signal 101 un tour de roue de 360 degrés et un intervalle temporelle associée à ce tour de roue. On définira la vitesse de référence $W^{reference}$ comme le rapport de la variation angulaire entre les deux centres de l'aire de contact par l'intervalle temporel séparant ces deux positions azimutales. On affectera la vitesse de référence $W^{reference}$ à la partie du signal située entre ces deux centres de l'aire de contact. Bien entendu, on peut aussi considérer deux chutes 111, 115 non contiguës du signal temporel 101 pour déterminer une seconde vitesse de référence $W^{reference}$ et affecter cette seconde vitesse à la partie du signal 101 située entre les chutes 111 et 115.

La Fig. 3 présente le résultat de l'étape de rééchantillonnage angulaire du signal 101 temporel. Ainsi, en profitant de la détermination des centres de l'aire de contact pour chaque chute du signal temporel effectuées à l'étape précédente, on phase facilement le signal temporel au tour de roue sur 360 degrés. On convient alors de répartir linéairement les points discrétisés de mesure sur le tour de roue. Même si une erreur de positionnement angulaire est réalisée à cette étape, une interpolation linéaire effectuée par exemple lors de l'étape d'agrégation des données permettra de lisser les résultats et de minimiser l'erreur de positionnement angulaire. De façon plus sophistiquée, ayant évalué une vitesse de référence à chaque tour de roue. Il est possible d'affecter des vitesses angulaires qui évoluent au tour de roue en prenant en compte les vitesses de référence des tours contigus. Par exemple, ayant déterminé les vitesses de références sur trois tours consécutifs, on peut affecter sur le tour de roue central, une première vitesse de référence sur le premier quart de tour de roue comme étant, la vitesse barycentre de la vitesse de référence du tour précédent pondérée 2 et de la vitesse de référence du tour actuel pondérée 1. Le quart suivant aura une vitesse de référence comme étant la vitesse barycentre de la vitesse de référence du tour actuel pondérée 2 par la vitesse de référence du tour précédent pondérée 1. Le troisième quart de tour de roue aura une vitesse de référence comme étant la vitesse barycentre de la vitesse de référence du tour actuel pondérée 2 par la vitesse de référence du tour suivant pondérée 1. Enfin le dernier quart de tour de roue aura une vitesse de référence comme étant la vitesse barycentre de la vitesse de référence du tour actuel pondérée 1 par la vitesse de référence du tour suivant pondérée 2. On répartit l'ensemble des points de mesure discrétisés sur chaque quart de tour de roue proportionnellement au rapport des vitesses de référence de chaque quart de tour sur la vitesse de référence du tour actuel. D'autres méthodes de lissage des points peuvent aussi être effectuées. Ici, la discrétisation spatiale des points n'est pas régulière en raison de la vitesse de roulage variable. Il est tout à fait possible de rendre cette discrétisation des points du signal 102 régulière en appliquant une méthode d'interpolation des points de mesure sur une répartition angulaire donnée au tour de roue. Cela permet alors d'obtenir un signal 102 rééchantillonné angulairement avec un pas angulaire régulier. La Fig. 3 montre le signal rééchantillonné angulairement 102 qui est périodique au tour de roue avec une discrétisation quelconque des points de mesure.

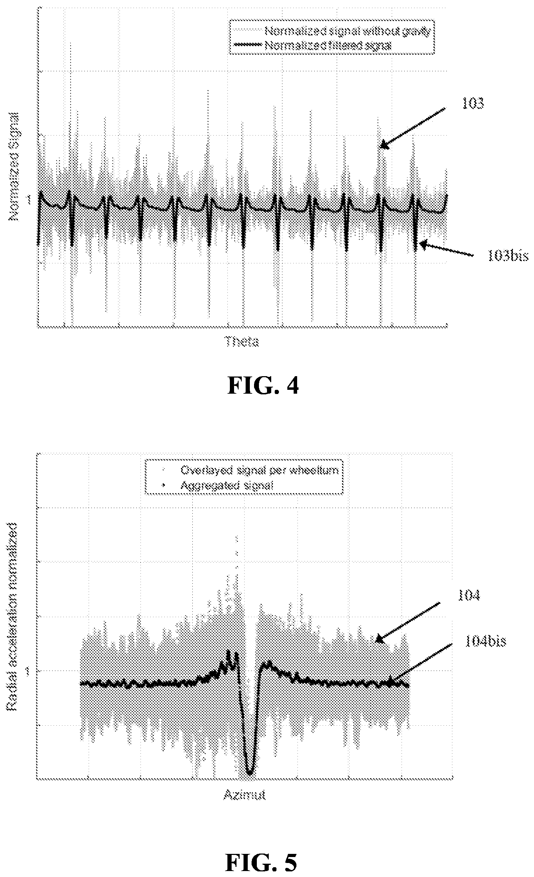

La Fig. 4 présente le résultat de l'étape de normalisation du premier signal 102 rééchantillonné angulairement sans interpolation des points. Ainsi, en profitant de la périodicité au tour de roue du signal tour de roue rééchantillonné angulairement, on découpe facilement le signal angulaire au tour de roue ou sur un multiple du tour de roue comme illustré à la Fig. 4, ici sur 12 tours de roue. L'étape de normalisation consiste à diviser l'amplitude du signal par la fonction puissance au carré de la vitesse de référence associé à chaque partie de tour de roue. La vitesse de référence ayant été déterminée lors de la première étape du traitement du signal 101 par exemple. La vitesse de référence étant une vitesse angulaire. Le résultat observé sur les courbes 103 et 103 bis est qu'entre chaque tour de roue, l'amplitude du signal normalisé est similaire. On n'observe plus les variations d'amplitude fortes entre les divers tours de roue effectués à des vitesses différentes et sur des routes différentes. De plus, le signal se centre sur la valeur unité. Ensuite, on superpose alors les segments de tours de roue sur le même intervalle angulaire d'une longueur qui est un multiple entier de 360 degrés qui sont matérialisés par les courbes en gris formant ici un faisceau de courbe 103. Cela permet de se rendre compte de la dispersion de mesure entre les tours de roue, ce qui est accentuée par le fait que les signaux n'ont pas été corrigés de la gravité terrestre. Cependant si on applique un filtre passe bas, on obtient la courbe noire 103 bis qui est beaucoup moins chahuté puisque nettoyé de certains bruits parasites. Cela permet de s'apercevoir que le signal 103 bis est périodique au tour de roue avec des variations faibles entre les tours de roue. A la fin de cette normalisation du signal 102, on obtient ici un signal 103 rééchantillonné angulairement et normalisé. La Fig. 4 montre le signal rééchantillonné angulairement normalisé 103 qui est centré sur la valeur unité comme l'atteste le filtre appliqué sur la courbe 103bis.

La Fig. 5 est le résultat de l'étape d'agrégation des données issus du signal 103 de l'étape précédente qui est une étape optionnelle. Ici, on superpose alors les segments de chaque tour de roue sur le même intervalle angulaire d'une longueur de 360 degrés qui sont matérialisés par les courbes en gris formant ici un faisceau de courbe 104. Cela permet de se rendre compte de la dispersion de mesure entre chaque tour de roue, ce qui est accentuée par le fait que les signaux n'ont pas été corrigés de la gravité terrestre. Cependant si on applique une correction de la gravité terrestre à chaque tour de roue avant l'étape de normalisation puisque l'accéléromètre est ici sensible à la gravité terrestre, l'agrégation des données par une méthode de la moyenne sur un intervalle de décile détermine la courbe 104 bis qui est bien plus stable au tour de roue. Cela permet d'obtenir le signal de déformation de l'enveloppe pneumatique soumis à des efforts extérieurs, en particulier la charge statique dans ce cas, Ce signal 104bis est représentatif de la mesure de l'enveloppe pneumatique en condition de roulage à vitesse variable sur sol de rugosité quelconque. Cette courbe est un invariant de l'enveloppe pneumatique en condition de roulage sous charge statique dans un état monté sur jante.

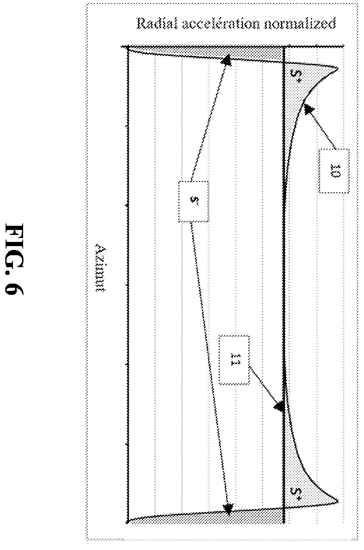

La Fig. 6 est une illustration pour expliciter le calcul des densités d'énergie positive $S^+$ et négative $S^-$ sur un signal tour de roue $Sig^{TDR}$ 10 normalisé rééchantillonné angulairement correspond à un seul tour de roue. Bien entendu, la méthode est identique si le signal tour de roue $Sig^{TDR}$ normalisé rééchantillonné angulairement est délimité sur plusieurs tours de roue.

On détermine le seuil A comme étant ici la valeur unité. Ce seuil est matérialisé par la ligne continue 11. En fait, il est préférable sur des signaux réels de prendre une valeur égale à 0,7. Si les signaux sont fortement perturbés, on peut choisir une valeur égale à 0,5 ou 0,6. En revanche, pour des signaux obtenus sur des chaussées globalement lisses, une valeur de l'ordre de 0, 8 ou 0,9 peut être employée. Il faut que cette valeur A soit figée pour toutes les étapes de la méthode.

On calcule les densités d'énergie positive $S^+$ ou négative $S^-$ comme la sommation des valeurs absolues des différences entre le signal tour de roue 10 et la valeur unité, représentée par la courbe continue 11. Nécessairement, la surface délimitée par les surfaces $S^+$ est égale à la surface délimitée par la surface $S^-$.

A partir de l'estimation de ces densités d'énergie S, il est aisé de déterminer la déformation de l'enveloppe pneumatique $Def_{\%}$ soumise à une charge statique en condition de roulage.

## Revendications

1. Méthode d'obtention de la déformation d'une enveloppe pneumatique soumise à une charge, dans un état monté sur roue afin de constituer un ensemble monté pneumatique en condition de roulage à une vitesse de rotation W, la dite enveloppe pneumatique ayant un sommet, destinée à être en contact avec le sol, qui est de révolution autour d'un axe naturel de rotation, comportant les étapes suivantes :

   - Fixer au moins un capteur sur l'enveloppe pneumatique au droit du sommet de l'enveloppe pneumatique apte à générer au moins un signal de sortie sensible à l'accélération selon la direction normale au sommet subie par ledit capteur dans l'enveloppe pneumatique ;
   - Réaliser l'acquisition (201) d'au moins un premier signal Sig temporel-comprenant au moins l'amplitude du au moins un signal de sortie lors d'un roulage ;
   - Délimiter le premier signal Sig sur un nombre $N^{TdR}$ de tours de roue afin de construire un signal tour de roue

$Sig^{TdR}$, $N^{TdR}$ étant supérieur à 1 ;

- Déterminer au moins une vitesse de référence $w^{reference}$ (202) associée a au moins une partie du signal tour de roue $Sig^{TdR}$; cette méthode est **caractérisée par** les étapes suivantes :

- Normaliser (203) la au moins une partie du signal tour de roue $Sig^{TdR}$; par une grandeur qui est une fonction F proportionnelle au carré de la vitesse de référence $W^{reference}$; sur un nombre de tour de roue $N'^{TdR}$ , $N'^{TdR}$ étant supérieur ou égal à 1 ;

- Rééchantillonner angulairement (204) la au moins une partie du signal tour de roue $Sig^{TdR}$; ;

- Définir au moins une première densité d'énergie S (205) à partir de la au moins une partie du signal tour de roue $Sig^{TdR}$; normalisé rééchantillonné angulairement, nommée $S^+$ lorsque la au moins une partie du signal tour de roue $Sig^{TdR}$; normalisé rééchantillonné angulairement est supérieure à un seuil A, ou nommée $S^-$ lorsque la au moins une partie du signal tour de roue $Sig^{TdR}$; normalisé rééchantillonné angulairement est inférieur ou égal au dit seuil A ;

- Identifier la déformation de l'enveloppe pneumatique $Def_{\%}$ (206) comme une fonction G de la au moins une première densité d'énergie S.

**2.** Méthode d'obtention de la déformation d'une enveloppe pneumatique soumise à une charge selon la revendication 1 dans laquelle, l'étape de détermination de la vitesse de référence $W^{reference}$ (202) consiste à effectuer le rapport de la variation angulaire sur la durée temporelle séparant deux positions azimutales du capteur dans de l'enveloppe pneumatique autour de l'axe naturel de rotation à partir du premier signal Sig ou à partir d'un signal phasé avec le premier signal Sig, suivant la formule suivante :

[Math 1]

$$W^{Reference} = \frac{\Delta(\alpha)}{\Delta(t)}$$

Où $\alpha$ est la position angulaire et t est l'abscisse temporelle associée à la position angulaire

**3.** Méthode d'obtention de la déformation d'une enveloppe pneumatique soumise à une charge selon l'une des revendications précédentes dans laquelle le pas angulaire est inférieur à 18 degrés préférentiellement inférieur à 6 degrés, très préférentiellement inférieure à 3 degrés.

**4.** Méthode d'obtention de la déformation d'une enveloppe pneumatique soumise à une charge selon l'une des revendications précédentes dans laquelle la méthode comprend une étape d'agrégation des données de la au moins une partie du signal tour de roue $Sig^{TdR}$; normalisé rééchantillonné angulairement sur au moins une sous partie de la au moins une partie du signal tour de roue $Sig^{TdR}$; normalisé rééchantillonné angulairement, la sous partie de la au moins une partie du signal tour de roue $Sig^{TdR}$; normalisé rééchantillonné angulairement devenant la au moins une partie du signal tour de roue $Sig^{TdR}$; normalisé rééchantillonné angulairement.

**5.** Méthode d'obtention de la déformation d'une enveloppe pneumatique soumise à une charge selon la revendication précédente dans laquelle la sous partie de la au moins une partie du signal tour de roue $Sig^{TdR}$; normalisé rééchantillonné angulairement est un tour de roue.

**6.** Méthode d'obtention de la déformation d'une enveloppe pneumatique soumise à une charge selon l'une des revendications précédentes dans laquelle l'étape d'agrégation des données (205) comprend une des méthodes comprises dans le groupe comprenant la moyenne sur un intervalle de décile, la médiane, la sélection ou l'intervalle de déciles, les méthodes d'interpolation, la moyenne pondérée ou non, l'optimisation de modèle paramétrique de la déformée du pneumatique.

**7.** Méthode d'obtention de la déformation d'une enveloppe pneumatique soumise à une charge selon l'une des revendications précédentes dans laquelle, ayant phasé le premier signal Sig par rapport à une position angulaire de l'enveloppe pneumatique, une correction Corr est apportée au premier signal Sig pour prendre en compte l'effet de la gravité terrestre avant l'étape de normalisation.

**8.** Méthode d'obtention de la déformation d'une enveloppe pneumatique soumise à une charge selon l'une des revendications précédentes dans laquelle, la méthode comprend une étape de filtrage de la au moins une partie du signal tour de roue $Sig^{TdR}$; normalisé et rééchantillonné angulairement.

9. Méthode d'obtention de la déformation d'une enveloppe pneumatique soumise à une charge selon l'une des revendications 1 à 8 dans laquelle le seuil A est compris entre 0,5 et 0,9.

10. Méthode d'obtention de la déformation d'une enveloppe pneumatique soumise à une charge selon l'une des revendications 1 à 9 dans laquelle les densités d'énergie positive S+ et négative S- sont obtenues par les formules suivantes

[Math 2a]

$$S^+ = \left| \sum_{Sig^{TDR} > A} (Sig^{TDR} - 1) \right| * \frac{N'^{TDR}}{N^U} \quad ;$$

et

[Math 2b]

$$S^- = \left| \sum_{Sig^{TDR} < A} (Sig^{TDR} - 1) \right| * \frac{N'^{TDR}}{N^U} \quad ;$$

Où $N^U$ est le nombre total de points discrétisés sur le signal tour de roue $Sig^{TdR}$; normalisé rééchantillonné angulairement.

11. Méthode d'obtention de la déformation d'une enveloppe pneumatique selon la revendication 10 dans laquelle l'acquisition du premier signal est effectuée à une fréquence d'échantillonnage constante et la discrétisation spatiale d'échantillonnage du premier signal est inférieure à 6 degrés, préférentiellement inférieure à 3 degrés, très préférentiellement inférieure à 1.

12. Méthode d'obtention de la déformation d'une enveloppe pneumatique soumise à une charge selon l'une des revendications 1 à 11 dans laquelle la fonction G est une fonction linéaire de la densité spectrale S selon la formule suivante :

[Math 3a]

$$G(X) = X/N'^{TdR}$$

13. Méthode d'obtention de la déformation d'une enveloppe pneumatique selon l'une des revendications 1 à 11 dans laquelle la fonction G est une fonction linéaire des densités spectrales $S^+$ et $S^-$ selon la formule suivante :

[Math 3b]

$$G(X,Y) = (X+Y)/(2*N'^{TdR})$$

**Patentansprüche**

1. Verfahren zur Ermittlung der Verformung eines Luftreifens, der eine Belastung erfährt, in einem zur Bildung einer montierten Einheit an einem Rad montierten Zustand, Reifen in einem Fahrzustand mit einer Drehzahl W, wobei der Luftreifen einen Gürtel aufweist, der dazu bestimmt ist, mit dem Boden in Kontakt zu sein, und sich um eine natürliche Drehachse dreht, umfassend die folgenden Schritte:

  - Befestigen mindestens eines Sensors an dem Luftreifen direkt unter dem Gürtel des Luftreifens, der dazu fähig ist, mindestens ein Ausgangssignal zu erzeugen, das von der Beschleunigung entlang der zu dem Gürtel senkrechten Richtung abhängig ist, die der Sensor in dem Luftreifen erfährt;

- Durchführen der Erfassung (201) mindestens eines ersten Zeitsignals Sig, das mindestens die Amplitude des mindestens einen Ausgangsignals bei einem Fahren beinhaltet;

- Begrenzen des ersten Signals Sig auf eine Anzahl $N^{TdR}$ von Radumdrehungen, um ein Radumdrehungssignal $Sig^{TdR}$; zu konstruieren, wobei $N^{TdR}$ größer als 1 ist;

- Bestimmen mindestens einer Referenzgeschwindigkeit $W^{reference}$ (202), die mit mindestens einem Teil des Radumdrehungssignals $Sig^{TdR}$; assoziiert ist; dieses Verfahren ist durch die folgenden Schritte gekennzeichnet:

- Normalisieren (203) des mindestens einen Teils des Radumdrehungssignals $Sig^{TdR}$; durch eine Größe, die eine Funktion F proportional zum Quadrat der Referenzgeschwindigkeit $W^{reference}$ ist; über eine Anzahl von Radumdrehungen $N'^{TdR}$, wobei $N'^{TdR}$ größer als oder gleich 1 ist;

- winkelförmiges erneutes Abtasten (204) des mindestens einen Teils des Radumdrehungssignals $Sig^{TdR}$;

- Definieren mindestens einer ersten Energiedichte S (205) anhand des mindestens einen Teils des normalisierten, winkelförmig erneut abgetasteten Radumdrehungssignals $Sig^{TdR}$, als $S^+$ bezeichnet, wenn der mindestens eine Teil des normalisierten, winkelförmig erneut abgetasteten Radumdrehungssignals $Sig^{TdR}$; größer als eine Schwelle A ist, oder als $S^-$ bezeichnet, wenn der mindestens eine Teil des normalisierten, winkelförmig erneut abgetasteten Radumdrehungssignals $Sig^{TdR}$; kleiner als oder gleich der Schwelle A ist;

- Identifizieren der Verformung des Luftreifens Def% (206) als eine Funktion G der mindestens einen ersten Energiedichte S.

2. Verfahren zur Ermittlung der Verformung eines Luftreifens, der eine Belastung erfährt, nach Anspruch 1, wobei der Schritt des Bestimmens der Referenzgeschwindigkeit $W^{reference}$ (202) darin besteht, das Verhältnis zwischen der Winkeländerung und dem Zeitraum, der zwei Azimutpositionen des Sensors in dem Luftreifen um die natürliche Drehachse trennt, anhand des ersten Signals Sig oder anhand eines zu dem ersten Signal Sig phasenverschobenen Signals gemäß der folgenden Formel zu bestimmen:

[Math 1]

$$W^{Reference} = \frac{\Delta(\alpha)}{\Delta(t)}$$

wobei $\alpha$ die Winkelposition ist und t die mit der Winkelposition assoziierte Zeitabszisse ist.

3. Verfahren zur Ermittlung der Verformung eines Luftreifens, der eine Belastung erfährt, nach einem der vorhergehenden Ansprüche, wobei die Winkelteilung kleiner als 18 Grad, bevorzugt kleiner als 6 Grad, sehr bevorzugt kleiner als 3 Grad ist.

4. Verfahren zur Ermittlung der Verformung eines Luftreifens, der eine Belastung erfährt, nach einem der vorhergehenden Ansprüche, wobei das Verfahren einen Schritt des Aggregierens der Daten des mindestens einen Teils des normalisierten, winkelförmig erneut abgetasteten Radumdrehungssignals $Sig^{TdR}$; über mindestens einen Teilbereich des mindestens einen Teils des normalisierten, winkelförmig erneut abgetasteten Radumdrehungssignals $Sig^{TdR}$; beinhaltet, wobei der Teilbereich des mindestens einen Teils des normalisierten, winkelförmig erneut abgetasteten Radumdrehungssignals $Sig^{TdR}$; der mindestens eine Teil des normalisierten, winkelförmig erneut abgetasteten Radumdrehungssignals $Sig^{TdR}$; wird.

5. Verfahren zur Ermittlung der Verformung eines Luftreifens, der eine Belastung erfährt, nach dem vorhergehenden Anspruch, wobei der Teilbereich des mindestens einen Teils des normalisierten, winkelförmig erneut abgetasteten Radumdrehungssignals $Sig^{TdR}$; eine Radumdrehung ist.

6. Verfahren zur Ermittlung der Verformung eines Luftreifens, der eine Belastung erfährt, nach einem der vorhergehenden Ansprüche, wobei der Schritt des Aggregierens der Daten (205) eines der Verfahren beinhaltet, die in der Gruppe enthalten sind, die den Mittelwert über ein Dezilintervall, den Medianwert, die Auswahl oder das Intervall von Dezilen, die Interpolationsverfahren, den gewichteten oder nichtgewichteten Mittelwert, die Optimierung eines parametrischen Modells der Verformung des Reifens beinhaltet.

7. Verfahren zur Ermittlung der Verformung eines Luftreifens, der eine Belastung erfährt, nach einem der vorhergehenden Ansprüche, wobei, nachdem das erste Signal Sig in Bezug auf eine Winkelposition des Luftreifens phasenverschoben wurde, eine Korrektur Corr an dem ersten Signal Sig vorgenommen wird, um vor dem Schritt des Normalisierens die Wirkung der Erdschwerkraft zu berücksichtigen.

**8.** Verfahren zur Ermittlung der Verformung eines Luftreifens, der eine Belastung erfährt, nach einem der vorhergehenden Ansprüche, wobei das Verfahren einen Schritt des Filterns des mindestens einen Teils des normalisierten und winkelförmig erneut abgetasteten Radumdrehungssignals $Sig^{TdR}$; beinhaltet.

**9.** Verfahren zur Ermittlung der Verformung eines Luftreifens, der eine Belastung erfährt, nach einem der Ansprüche 1 bis 8, wobei die Schwelle A zwischen 0,5 und 0,9 liegt.

**10.** Verfahren zur Ermittlung der Verformung eines Luftreifens, der eine Belastung erfährt, nach einem der Ansprüche 1 bis 9, wobei die positive Energiedichte S+ und die negative Energiedichte S- durch die folgenden Formeln ermittelt werden:

[Math 2a]

$$S^+ = \left[\sum_{Sig^{TDR}>A}(Sig^{TDR} - 1)\ \right] * \frac{N^{TDR}}{N^U};$$

und

[Math 2b]

$$S^- = \left[\sum_{Sig^{TDR}\leq A}(Sig^{TDR} - 1)\ \right] * \frac{N^{TDR}}{N^U};$$

wobei $N^U$ die Gesamtanzahl diskretisierter Punkte auf dem normalisierten, winkelförmig erneut abgetasteten Radumdrehungssignal $Sig^{TdR}$; ist.

**11.** Verfahren zur Ermittlung der Verformung eines Luftreifens nach Anspruch 10, wobei die Erfassung des ersten Signals mit einer konstanten Abtastfrequenz erfolgt und die räumliche Diskretisierung der Abtastung des ersten Signals kleiner als 6 Grad, bevorzugt kleiner als 3 Grad, sehr bevorzugt kleiner als 1 ist.

**12.** Verfahren zur Ermittlung der Verformung eines Luftreifens, der eine Belastung erfährt, nach einem der Ansprüche 1 bis 11, wobei die Funktion G eine lineare Funktion der Spektraldichte S gemäß der folgenden Formel ist:

[Math 3a]

$$G(X) = X/N'^{TdR}$$

**13.** Verfahren zur Ermittlung der Verformung eines Luftreifens nach einem der Ansprüche 1 bis 11, wobei die Funktion G eine lineare Funktion der Spektraldichten S+ und S- gemäß der folgenden Formel ist:

[Math 3b]

$$G(X,Y) = (X+Y)/(2*N'^{TdR})$$

## Claims

**1.** Method for ascertaining the deformation of a tyre casing subjected to a load when mounted on a wheel so as to constitute a pneumatic mounted assembly in rolling state with rotation speed W, said tyre casing having a crown, intended to be in contact with the ground, and in revolution about a natural rotational axis, comprising the following steps:

- Fastening at least one sensor to the tyre casing at the crown of the tyre casing so as to generate at least one output signal sensitive to the acceleration, in the direction normal to the crown, applied to said sensor in the tyre casing;
- Acquiring (201) at least one first temporal signal Sig comprising at least the amplitude of the at least one output signal while rolling;
- Delimiting the first signal Sig over a number $N^{TdR}$ of wheel turns so as to construct a wheel-turn signal $Sig^{TdR}$, $N^{TdR}$ being greater than 1;

- Determining at least one reference speed $W^{reference}$ (202) associated with at least one portion of the wheel-turn signal $Sig^{TdR}$;

the method being **characterized by** the following steps:

- Normalizing (203) the at least one portion of the wheel-turn signal $Sig^{TdR}$; by a variable which is a function F proportional to the square of the reference speed $W^{reference}$, over a number of wheel turns $N'^{TdR}$, $N'^{TdR}$ being greater than or equal to 1;
- Angularly resampling (204) the at least one portion of the wheel-turn signal $Sig^{TdR}$;
- Defining at least one first energy density S (205) from the at least one portion of the angularly resampled normalized wheel-turn signal $Sig^{TdR}$, named $S^+$ when the at least one portion of the angularly resampled normalized wheel-turn signal $Sig^{TdR}$; is greater than a threshold A, or named $S^-$ when the at least one portion of the angularly resampled normalized wheel-turn signal $Sig^{TdR}$; is less than or equal to said threshold A;
- Identifying the deformation Def% (206) of the tyre casing as a function G of the at least one first energy density S.

2. Method for ascertaining the deformation of a tyre casing subjected to a load according to Claim 1, wherein the step of determining the reference speed $W^{reference}$ (202) consists of establishing the ratio of the angular variation to the temporal duration separating two azimuthal positions of the sensor in the tyre casing around the natural rotational axis, from the first signal Sig or from a signal in phase with the first signal Sig, according to the following formula:

[Math 1]

$$W^{Reference} = \frac{\Delta(\alpha)}{\Delta(t)}$$

wherein $\alpha$ is the angular position and t is the temporal abscissa associated with the angular position.

3. Method for ascertaining the deformation of a tyre casing subjected to a load according to either of the preceding claims, wherein the angular pitch is less than 18 degrees, preferably less than 6 degrees, very preferably less than 3 degrees.

4. Method for ascertaining the deformation of a tyre casing subjected to a load according to one of the preceding claims, wherein the method comprises a step of aggregating the data from the at least one portion of the angularly resampled normalized wheel-turn signal $Sig^{TdR}$; over at least one sub-portion of the at least one portion of the angularly resampled normalized wheel-turn signal $Sig^{TdR}$, the sub-portion of the at least one portion of the angularly resampled normalized wheel-turn signal $Sig^{TdR}$; becoming the at least one portion of the angularly resampled normalized wheel-turn signal $Sig^{TdR}$.

5. Method for ascertaining the deformation of a tyre casing subjected to a load according to the preceding claim, wherein the sub-portion of the at least one portion of the angularly resampled normalized wheel-turn signal $Sig^{TdR}$; is one wheel turn.

6. Method for ascertaining the deformation of a tyre casing subjected to a load according to one of the preceding claims, wherein the data aggregation step (205) comprises one of the methods included in the group comprising: mean over a decile interval, the median, the selection or interval of deciles, the methods of interpolation, the weighted or non-weighted mean, optimization of the parametric model of tyre deformation.

7. Method for ascertaining the deformation of a tyre casing subjected to a load according to one of the preceding claims, wherein having phased the first signal Sig with respect to an angular position of the tyre casing, a correction Corr is made to the first signal Sig to take account of the effect of terrestrial gravity before the normalization step.

8. Method for ascertaining the deformation of a tyre casing subjected to a load according to one of the preceding claims, wherein the method comprises a step of filtering the at least one portion of the angularly resampled normalized wheel-turn signal $Sig^{TdR}$.

9. Method for ascertaining the deformation of a tyre casing subjected to a load according to one of Claims 1 to 8, wherein the threshold A is between 0.5 and 0.9.

10. Method for ascertaining the deformation of a tyre casing subjected to a load according to one of Claims 1 to 9, wherein the positive energy density S+ and negative energy density S- are obtained by the following formulae:

[Math 2a]

$$S^+ = \left| \sum_{Sig^{TDR} > A} (Sig^{TDR} - 1) \right| * \frac{N'^{TDR}}{N^U}$$

;

and

[Math 2b]

$$S^- = \left| \sum_{Sig^{TDR} \leq A} (Sig^{TDR} - 1) \right| * \frac{N'^{TDR}}{N^U}$$

;

where N is the total number of discretized points on the angularly resampled normalized wheel-turn signal $Sig^{TDR}$.

11. Method for ascertaining the deformation of tyre casing according to Claim 10, wherein the first signal is acquired at a constant sampling frequency and the spatial discretization for sampling the first signal is less than 6 degrees, preferably less than 3 degrees, very preferably less than 1 degree.

12. Method for ascertaining the deformation of a tyre casing subjected to a load according to one of Claims 1 to 11, wherein the function G is a linear function of the spectral density S according to the following formula:

[Math 3a]
$$G(X) = X/N'^{TdR}.$$

13. Method for ascertaining the deformation of a tyre casing according to one of Claims 1 to 11, wherein the function G is a linear function of the spectral densities S+ and S- according to the following formula:

[Math 3b]
$$G(X,Y) = (X+Y)/(2*N'^{TdR}).$$

EP 4 380 804 B1

Acquisition d'un premier signal Sig
En amplitude et discrétisé temporellement
201

Déterminer une vitesse de référence
W^référence associée à une partie de Sig
202

Rééchantillonner angulairement Sig
204

Normaliser Sig à l'aide d'une fonction
F de la variable W^référence
203

Agréger les données de Sig rééchantillonné et normalisé
208

Définir une première densité d'énergie S
205

Identifier Defts de l'enveloppe pneumatique
à partir de la densité d'énergie S
206

**FIG. 1**

**FIG. 2**

**FIG. 3**

**FIG. 4**

**FIG. 5**

**FIG. 6**